(19) Europäisches Patentamt / European Patent Office / Office européen des brevets

(11) **EP 4 787 474 A1**

(12) **EUROPEAN PATENT APPLICATION**
published in accordance with Art. 153(4) EPC

(43) Date of publication:
**05.08.2026 Bulletin 2026/32**

(21) Application number: 25835171.7

(22) Date of filing: 08.07.2025

(51) International Patent Classification (IPC):
$H01M\ 4/36^{(2006.01)}$   $H01M\ 4/62^{(2006.01)}$
$H01M\ 4/505^{(2010.01)}$   $H01M\ 4/525^{(2010.01)}$
$H01M\ 10/0525^{(2010.01)}$

(52) Cooperative Patent Classification (CPC):
Y02E 60/10

(86) International application number:
**PCT/CN2025/107570**

(87) International publication number:
**WO 2026/113433 (04.06.2026 Gazette 2026/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 28.11.2024 CN 202411719689

(71) Applicant: **Guangdong Brunp Recycling Technology Co., Ltd.**
**Foshan, Guangdong 528137 (CN)**

(72) Inventors:
• **CHEN, Fangyuan**
  **Foshan, Guangdong 528137 (CN)**
• **HUANG, Weiyan**
  **Foshan, Guangdong 528137 (CN)**
• **WANG, Tao**
  **Foshan, Guangdong 528137 (CN)**
• **YU, Haijun**
  **Foshan, Guangdong 528137 (CN)**
• **LI, Changdong**
  **Foshan, Guangdong 528137 (CN)**

(74) Representative: **LifeTech IP**
**Spies & Behrndt Patentanwälte PartG mbB**
**Elsenheimerstraße 47a**
**80687 München (DE)**

(54) **TERNARY POSITIVE ELECTRODE MATERIAL, PREPARATION METHOD, SCREENING METHOD AND SECONDARY BATTERY**

(57) The present disclosure provides a ternary cathode material, a preparation method, a screening method, and a secondary battery, and relates to the technical field of cathode materials. Particles of the ternary cathode material comprise an active material matrix and a coating layer coated on the active material matrix. A coating effectiveness factor $A$ of the ternary cathode material is

0.001 GPa/nm$^2$-0.2 GPa/nm$^2$, wherein $A = \frac{\overline{D} \times \overline{E}}{S_N^2}$, $\overline{D}$ is

an average value of a ratio of a thickness of the coating layer of the ternary cathode material particles to a diameter of the active material matrix, and is unitless; $\overline{E}$ is an average Young's modulus of the ternary cathode material particles, and is in a unit of GPa; $S_N^2$ is a variance of the thickness of the coating layer of the ternary cathode material particles, and is in a unit of nm$^2$. When the coating effectiveness factor A disclosed in the present disclosure is within the above range, the ternary cathode material features high structural stability, high cycling performance, low capacity decay rate, and low residual alkali content.

FIG. 1

**Description**

**CROSS-REFERENCE TO RELATED APPLICATION**

The present disclosure claims priority to Chinese Patent Application No. 2024117196893 filed with the China National Intellectual Property Administration on November 28, 2024 and entitled "TERNARY CATHODE MATERIAL, PREPARATION METHOD, SCREENING METHOD, AND SECONDARY BATTERY", whose contents are incorporated herein by reference in their entirety.

**TECHNICAL FIELD**

The present disclosure relates to the technical field of cathode materials for secondary batteries, and in particular to a ternary cathode material, a preparation method, a screening method, and a secondary battery.

**BACKGROUND**

Lithium nickel cobalt manganese oxide, a ternary cathode material for a lithium-ion battery, is considered as the most promising cathode material for widespread application in power batteries due to its high discharge capacity, low production costs, stable layered structure, and good thermal stability. However, the ternary cathode material exhibits severe capacity loss, voltage decay, and unsatisfactory rate performance during cycling, thereby severely hindering commercial applications thereof.
Existing studies indicate that the main causes of capacity loss, voltage decay, and poor rate performance include: the direct contact between the cathode material and an electrolyte solution during the charge-discharge process may lead to some side reactions, such as the dissolution of an active material and the decomposition of the electrolyte solution on the surface of a highly oxidized active material; secondly, repeated expansion and contraction of crystal lattice during charge-discharge induces cracks among primary particles, thereby compromising their continuity and hindering electron transport; and when the electrolyte solution penetrate into the interior of the secondary particles through microcracks, more severe side reactions occur. Furthermore, as the cut-off voltage increases, the microcracks worsen, leading to the formation of an excessively thick Cathode Electrolyte Interface (CEI) film, and reducing the interfacial activity and electrochemical performance of the material. At present, surface coating modification of the ternary cathode material is widely employed in the industry to alleviate issues, such as cathode/electrolyte interface reactions and intergranular cracking. Conventional chemical coating methods include: co-precipitation method, sol-gel method, hydrothermal method and solid-state method. Traditional deposition methods include: spray drying method, pulsed laser deposition, physical vapor deposition, and chemical vapor deposition. Advanced deposition methods include: atomic layer deposition and molecular layer deposition.
Existing coated ternary cathode materials still exhibit poor stability and are prone to structural changes during use, which causes capacity loss, voltage decay, and poor rate performance of the lithium-ion battery.
In view of the above, the present disclosure is provided.

**SUMMARY**

The present disclosure provides a ternary cathode material, a preparation method, a screening method, and a secondary battery. The ternary cathode material exhibits superior structural stability and cycling performance, and a low capacity decay rate.
The present disclosure is implemented as follows.
In a first aspect, the present disclosure provides a ternary cathode material, wherein particles of the ternary cathode material include an active material matrix and a coating layer coated on the active material matrix; a coating effectiveness factor $A$ of the ternary cathode material is 0.001 GPa/nm$^2$-0.2 GPa/nm$^2$, wherein $A = \dfrac{\overline{D} \times \overline{E}}{S_N{}^2}$, $\overline{D}$ is an average value of a ratio of a thickness of the coating layer of the ternary cathode material particles to a diameter of the active material matrix, and is unitless; $\overline{E}$ is an average Young's modulus of the ternary cathode material particles, and is in a unit of GPa; $S_N{}^2$ is a variance of the thickness of the coating layer of the ternary cathode material particles, and is in a unit of nm$^2$.

In an optional embodiment, the $\overline{D}$ is 0.001-0.1, $\overline{D} = \dfrac{\sum_{i=1}^{N} D_i}{N}$, and $D = \dfrac{d_{iLT}}{d_{iID}}$, where $d_{iLT}$ ($d_{i\,layer\,thickness}$) is the thickness of the coating layer of the ternary cathode material particles, and is in a unit of nm; $d_{iID}$ ($d_{i\,inner\,diameter}$) is the diameter of the active material matrix in the ternary cathode material particles, and is in a unit of nm; and $N$ is a sample size of the ternary cathode material particles; and/or,

$\overline{E}$ is 160 GPa-350 GPa, and $\overline{E} = \frac{\sum_{i=1}^{N} E_i}{N}$, where $N$ is the sample size of the ternary cathode material particles, and $E_i$ is a Young's modulus of the ternary cathode material particles measured by nanoindentation, and is in a unit of GPa; and/or,

$S_N^2$ is 10 nm²-3,500 nm², and $S_N^2 = \frac{\sum_{i=1}^{N} (d_{iLT} - \overline{d_{LT}})^2}{N}$, where $\overline{d_{LT}}$ is an average thickness of the coating layer of the ternary cathode material particles, and is in a unit of nm; and $N$ is the sample size of the ternary cathode material particles.

In an optional embodiment, $di_{LT}$ is 10 nm-1,000 nm, and $di_{LT}$ is an average value of a sum of the thicknesses of the coating layer on a longest Feret diameter and a sum of the thicknesses of the coating layer on a shortest Feret diameter of the ternary cathode material particles; and/or,
$d_{iiD}$ is 1 μm-20 μm, and $d_{iiD}$ is an average value of a length of an active material matrix on the longest Feret diameter and a length of an active material matrix on the shortest Feret diameter of the ternary cathode material particles.
In an optional embodiment, the sample size $N$ of the ternary cathode material particles is ≥10.
In an optional embodiment, the active material matrix has a general formula of $Li_xNi_aCo_bM_cM'_{1-a-b-c}A_yO_{2-y}$, wherein M is at least one selected from the group consisting of Al and Mn; M' is at least one selected from the group consisting of Zr, Sr, Mo, Ba, W, B, Ti, Mg, Li, C, Si, Ca, Cu, La, Ce, Bi, In, Nb, and Y; A is at least one selected from the group consisting of P and F; wherein 0.95≤x<1.1, a>0, b>0, c>0, 0.95≤(a+b+c)≤1, 0≤y≤0.01; and/or,
the coating layer is at least one selected from the group consisting of $V_2O_5$, $Al_2O_3$, $ZrO_2$, $TiO_2$, $SnO_2$, $ZnO$, $MgO$, $RuO_2$, $La_2O_3$, $CeO_2$, $Co_3O_4$, $SiO_2$, $FePO_4$, $Li_3PO_4$, $Li_2MnO_3$, $LiAlO_2$, $Li_2TiO_3$, $Li_2ZrO_3$, $Li_3VO_4$, $Li_2SiO_3$, $AlF_3$, $LaF_3$, and $MgF_2$.
In a second aspect, the present disclosure provides a method for preparing the ternary cathode material according to any one of the above embodiments, including:

pre-coating: dry coating the active material matrix with a first coating agent and performing a first calcination, to obtain a pre-coated ternary cathode material; and

coating: wet coating the pre-coated ternary cathode material with a mixed coating agent and performing a second calcination, to obtain the ternary cathode material.

In an optional embodiment, the preparation method satisfies at least one of features A-F below:

A. the first coating layer is at least one selected from the group consisting of $V_2O_5$, $Al_2O_3$, $ZrO_2$, $TiO_2$, $SnO_2$, $ZnO$, $MgO$, $RuO_2$, $La_2O_3$, $CeO_2$, $Co_3O_4$, $SiO_2$, $FePO_4$, $Li_3PO_4$, $Li_2MnO_3$, $LiAlO_2$, $Li_2TiO_3$, $Li_2ZrO_3$, $Li_3VO_4$, $Li_2SiO_3$, $AlF_3$, $LaF_3$, and $MgF_2$;

B. a mass ratio of the first coating agent to the active material matrix is 0.05%-2%;

C. the first calcination is performed at a temperature of 400 °C-700 °C under an oxygen atmosphere for 3 h-10 h;

D. a preparation method of the active material matrix includes: calcining a mixture including a precursor of the ternary cathode material, a dopant, and a lithium source or a mixture including a precursor of the ternary cathode material and a lithium source, to obtain the active material matrix;

E. the coating includes: drying and granulating a slurry including the pre-coated ternary cathode material, the mixed coating agent, and a solvent to obtain a powder; and performing water washing, drying, the second calcination, and crushing on the powder successively, to obtain the ternary cathode material; and

F. the second calcination is performed at a temperature of 400 °C-700 °C under an oxygen atmosphere for 3 h-10 h.

In an optional embodiment, the coating satisfies at least one of features a-h below:

a. a mass ratio of the mixed coating agent to the pre-coated ternary cathode material in the slurry is 5%-25%;

b. the mixed coating agent includes a second coating agent and a surfactant, a mass ratio of the surfactant to the second coating agent in the mixed coating agent is 15-25:1;

c. the mixed coating agent includes the second coating agent and the surfactant, the surfactant is at least one selected from the group consisting of sodium dodecylbenzenesulfonate, Tween-80, polymethacrylic acid, polyethylene glycol, and ammonium polymethacrylate;

d. the mixed coating agent includes the second coating agent and the surfactant, the second coating agent is at least one selected from the group consisting of $V_2O_5$, $Al_2O_3$, $ZrO_2$, $TiO_2$, $SnO_2$, $ZnO$, $MgO$, $RuO_2$, $La_2O_3$, $Mn_3(PO_4)_2$, $AlPO_4$, $CeO_2$, $Co_3O_4$, $SiO_2$, $FePO_4$, $Li_3PO_4$, $Li_2MnO_3$, $LiAlO_2$, $Li_2TiO_3$, $Li_2ZrO_3$, $Li_3VO_4$, $Li_2SiO_3$, $AlF_3$, $LaF_3$, and $MgF_2$;

e. a solid content of the slurry is 100 g/L-200 g/L;

f. the solvent is at least one selected from the group consisting of methanol, ethanol, isopropanol, and butanol;

g. the drying is performed at a temperature of 60 °C-200 °C for 10 h-25 h; and

h. the mixed coating agent is airflow crushed at an airflow crushing pressure of 5 MPa-12 MPa for a duration of 2.5 h-8 h, to prepare the slurry.

In a third aspect, the present disclosure provides a method for screening the ternary cathode material according to the above embodiments, wherein the ternary cathode material satisfies the following conditions:

① the ternary cathode material includes the active material matrix and the coating layer coated on the active material matrix; and

② the ternary cathode material has a coating effectiveness factor $A$ of 0.001 GPa/nm$^2$-0.2 GPa/nm$^2$, wherein $A = \dfrac{\bar{D} \times \bar{E}}{S_N{}^2}$, $\bar{D}$ is an average value of a ratio of a thickness of the coating layer of the ternary cathode material particles to a diameter of the active material matrix, and is unitless; $\bar{E}$ is an average Young's modulus of the ternary cathode material particles, and is in a unit of GPa; $S_N{}^2$ is a variance of the thickness of the coating layer of the ternary cathode material particles, and is in a unit of nm$^2$.

In a fourth aspect, the present disclosure provides a secondary battery, including the ternary cathode material according to any one of the above embodiments or the ternary cathode material prepared by the preparation method according to any one of the above embodiments.

The present disclosure has the following beneficial effects.

The coating effectiveness factor $A$ of the ternary cathode material in the present disclosure is 0.001 GPa/nm$^2$-0.2 GPa/nm$^2$. Within this range, the coating layer and the active material matrix of the ternary cathode material satisfy a mutually coordinated relationship among $S_N{}^2$, $\bar{D}$, and $\bar{E}$, and the ternary cathode material features high structural stability, high cycling performance, low capacity decay rate, and low residual alkali content.

**BRIEF DESCRIPTION OF DRAWINGS**

To more clearly describe technical schemes of examples of the present disclosure, drawings to be used in the examples will be briefly introduced below. It should be understood that the following drawings only show some examples of the present disclosure, and therefore should not be construed as limiting the scope of the present disclosure. For those having ordinary skills in the art, other relevant drawings may also be obtained based on these drawings without creative work.

FIG. 1 is a TEM image of a ternary cathode material prepared in Example 1; and
FIG. 2 is a TEM image of a ternary cathode material prepared in Comparative Example 5.

**DETAILED DESCRIPTION**

To make objectives, technical schemes, and advantages of examples of the present disclosure clearer, the technical schemes in the examples of the present disclosure will be clearly and completely described below. The examples without clear indication of specific conditions are carried out based on conventional conditions or based on conditions recommended by manufacturers. Where no manufacturers are specified, the reagents or instruments used are all commercially available conventional products.

Among existing coating modification methods, the solid-phase method is the easiest method to implement coating. This method simply involves mixing a coating material with a precursor of a cathode material and a lithium source or cathode powder, followed by calcination to complete coating. However, the thickness and uniformity of the coating layer is difficult to be controlled. The applicant has found that that the thickness and uniformity of the coating layer affect its stress resistance variations caused by the contraction and expansion of an active material during the charge-discharge process. Moreover, if the coating amount is small, the coating layer has poor uniformity and fail to completely cover the active material, leaving the active material exposed. This exposure causes the active material to react with water and carbon dioxide in air during storage to form residual alkali, thereby resulting in, e.g., corrosion by the electrolyte solution during the charge-discharge process. This ultimately leads to structural change of the material, causing capacity loss, voltage decay, and poor rate performance of the lithium-ion battery.

An embodiment of the present disclosure provides a ternary cathode material, wherein particles of the ternary cathode material include an active material matrix and a coating layer coated on the active material matrix; a coating effectiveness factor $A$ of the ternary cathode material is 0.001 GPa/nm$^2$-0.2 GPa/nm$^2$, and specifically may be 0.001 GPa/nm$^2$, 0.002 GPa/nm$^2$, 0.003 GPa/nm$^2$, 0.005 GPa/nm$^2$, 0.010 GPa/nm$^2$, 0.020 GPa/nm$^2$, 0.030 GPa/nm$^2$, 0.050 GPa/nm$^2$, 0.070 GPa/nm$^2$, 0.090 GPa/nm$^2$, 0.110 GPa/nm$^2$, 0.130 GPa/nm$^2$, 0.150 GPa/nm$^2$, 0.2 GPa/nm$^2$, or any value within the range of 0.001 GPa/nm$^2$-0.2 GPa/nm$^2$, wherein $A = \frac{\overline{D} \times \overline{E}}{S_N^2}$, $\overline{D}$ is an average value of a ratio of a thickness of the coating layer of the ternary cathode material particles to a diameter of the active material matrix, and is unitless; $E$ is an average Young's modulus of the ternary cathode material particles, and is in a unit of GPa; $S_N^2$ is a variance of the thickness of the coating layer of the ternary cathode material particles, and is in a unit of nm$^2$.

The coating layer of the ternary cathode material serves as a protective layer to protect the ternary cathode material from being corroded by the electrolyte during the charge-discharge cycle process, enhancing resistance of the ternary cathode material to $H_2O$ and $CO_2$ in ambient air, and suppressing the formation of cracks due to the repeated expansion and contraction of crystals during the charge-discharge process.

When the amount of the coating material relative to the ternary cathode material is larger, but the coating layer exhibits poor uniformity and poor mechanical performance, the active material matrix may be exposed, and the ternary cathode material may have poor structural stability. When the amount of the coating material relative to the ternary cathode material is smaller, but the coating layer exhibits good uniformity and excellent mechanical performance, the ternary cathode material may be structurally stable with high coating effectiveness. When the amount of the coating material relative to the ternary cathode material is larger, the active material is completely coated, and the mechanical performance is excellent, the coating layer may be too thick relative to the active material matrix, resulting in poor coating uniformity, and further resulting in low coating effectiveness and poor structural stability of the ternary cathode material. Therefore, the structural stability of the ternary cathode materials needs to be determined by combining three factors: the ratio of the thickness of the coating layer to the diameter of the active material matrix, the average Young's modulus, and the variance of the thickness of the coating layer. Any one or two of the three factors cannot adequately indicate the structural stability of the ternary cathode material.

The coating effectiveness factor $A$ of the ternary cathode material in the present disclosure is 0.001 GPa/nm$^2$-0.2 GPa/nm$^2$. Within this range, the coating layer and the active material of the ternary cathode material simultaneously satisfy a mutually coordinated relationship among $S_N^2$, $\overline{D}$, and $\overline{E}$. The cathode material satisfying the coating effectiveness factor features high structural stability, high cycling performance, low capacity decay rate, and low residual alkali content.

In some embodiments, the $\overline{D}$ is 0.001-0.1, specifically, 0.001, 0.003, 0.005, 0.007, 0.01, 0.02, 0.04, 0.06, 0.08, 0.1, or any value within the range of 0.001-0.1, $\overline{D} = \frac{\sum_{i=1}^{N} D_i}{N}$, and $D = \frac{d_{iLT}}{d_{iID}}$, where $d_{iLT}$ is the thickness of the coating layer of the ternary cathode material particles, and is in a unit of nm; $d_{iID}$ is the diameter of the active material matrix in the ternary cathode material particles, and is in a unit of nm; and $N$ is a sample size of the ternary cathode material particles.

Since $d_{LT}$ cannot reflect a relative relationship between the thickness of the coating layer and the particle size of the active material matrix in the ternary cathode material, $D$ is used in this embodiment to evaluate a relative relationship between the coating layer and the active material matrix in the ternary cathode material. The $D$ value reflects a relative content of the coating layer and the active material matrix in the ternary cathode material. A $D$ value that is too large reduces the proportion of the active material in the ternary cathode material, while a $D$ value that is too small means the coating layer cannot provide adequate protection for the active material.

In some embodiments, $\overline{E}$ is 160 GPa-350 GPa, and specifically may be 160 GPa, 170 GPa, 190 GPa, 210 GPa, 230 GPa, 250 GPa, 270 GPa, 290 GPa, 310 GPa, 330 GPa, 350 GPa, or any value within the range of 160 GPa-350 GPa, wherein $\overline{E} = \frac{\sum_{i=1}^{N} E_i}{N}$, $N$ is the sample size of the ternary cathode material particles, and $E_i$ is the Young's modulus of the ternary cathode material particles measured by nanoindentation, in a unit of GPa.

$E$ is used to evaluate the mechanical performance of the ternary cathode material composed of the coating layer and the active material matrix. For a given active material matrix, the value of $E$ is related to the type of the coating agent, the thickness of the coating layer, and the uniformity of the thickness of the coating layer. The value of E increases with a higher Young's modulus of the selected coating agent, a greater coating thickness, and improved coating uniformity; conversely, the value of E of the corresponding cathode material decreases. The coating layer of the ternary cathode material with a high E value can suppress the formation of microcracks and voids caused by stress changes in the active material matrix during the charge-discharge process. Specifically, an atomic force microscope may be used to record a relationship between force and indenter displacement as the indenter is slowly pressed into the material surface, to calculate the Young's modulus of the sample particles using the system.

In some embodiments, $S_N^2$ is 10 nm²-3,500 nm², and specifically may be 10 nm², 30 nm², 50 nm², 100 nm², 300 nm², 500 nm², 1,000 nm², 1,500 nm², 2,000 nm², 2,500 nm², 3,000 nm², 3,500 nm², or any value within the range of 10 nm²-3,500 nm², wherein $S_N^2 = \frac{\sum_{i=1}^{N} (d_{iLT} - \overline{d_{LT}})^2}{N}$, $\overline{d_{LT}}$ is an average thickness of the coating layer of the ternary cathode material particles, and is in a unit of nm; and the $N$ is the sample size of the ternary cathode material particles.

$S_N^2$ is used to evaluate the uniformity of the thickness of the coating layer of the cathode material. Since the coating layer exhibits different uniformity even with the same coating amount and active material, $S_N^2$ is used to indicate the uniformity degree of the coating layer on the active material surface. If a portion of the active material is exposed due to excessively poor coating layer uniformity, the exposed portion will form lithium-oxygen compounds during storage and cycling, which will then react with react with $H_2O$ and $CO_2$ in the air to form residual alkali. The residual alkali will react with the electrolyte solution to form HF, which will then react with $Li_2CO_3$ to generate $CO_2$, thereby resulting in battery bulging and swelling, and impacting the cycling performance and safety, including potential fire and explosion hazard. The HF will further cause transition metal ions in the ternary cathode material NCM/NCA to be dissolved out, thereby destroying its layered crystal structure, and deteriorating the capacity retention ratio of the electrode material. Moreover, a side reaction may occur between a nickel-rich material and an electrolyte to generate a byproduct that hinders lithium-ion transport and a Ni-O resistive layer with a rock salt structure, thereby increasing the diffusion resistance.

In some embodiments, $d_{iLT}$ is 10 nm-1,000 nm, specifically, 10 nm, 30 nm, 50 nm, 100 nm, 200 nm, 300 nm, 400 nm, 500 nm, 600 nm, 700 nm, 800 nm, 900 nm, 1,000 nm, or any value within the range of 10 nm-1,000 nm, and $d_{iLT}$ is an average value of a sum of the thicknesses of the coating layer on a longest Feret diameter and a sum of the thicknesses of the coating layer on a shortest Feret diameter of the ternary cathode material particles; and/or,

$d_{iID}$ is 1 μm-20 μm, specifically, 1 μm, 2 μm, 4 μm, 6 μm, 8 μm, 10 μm, 12 μm, 14 μm, 16 μm, 18 μm, 20 μm, or any value within the range of 1 μm-20 μm, and $d_{iID}$ is an average value of a length of an active material matrix on the longest Feret diameter and a length of an active material matrix on the shortest Feret diameter of the ternary cathode material particles.

In some embodiments, the longest Feret diameter and the shortest Feret diameter are obtained by analyzing sample images using Matlab, and the length of the active material matrix and the thickness of the coating layer are obtained by analyzing the sample images using ImageJ.

Specifically, after the longest and shortest Feret diameters are determined using Matlab analysis, the sample images are analyzed using ImageJ, and the thickness of the coating layer along the longest Feret diameter and the thickness of the coating layer along the shortest Feret diameter of the ternary cathode material are measured respectively. It should be noted that coating layers exist at both ends of the longest and the shortest Feret diameters, and the thickness of the coating layer at both ends of the longest and the shortest Feret diameters is measured. Then, a sum of the coating thicknesses at the two ends of the longest Feret diameter and a sum of the coating thicknesses at the two ends of the shortest Feret diameter are calculated separately. Then an average value of the sum of the coating thicknesses at the two ends of the longest Feret diameter and the sum of the coating thicknesses at the two ends of the shortest Feret diameter are calculated separately is calculated, to obtain $d_{LT}$ ($d_{layer\ thickness}$), and a corresponding variance thereof is calculated, to obtain $S_N^2$. The sample images are analyzed using ImageJ, an average value of the length of the active material matrix on the longest Feret diameter and an average value of the length of the active material matrix on the shortest Feret diameter of the ternary cathode material are measured respectively to obtain $d_{ID}$ ($d_{inner\ diameter}$), $D = \frac{d_{LT}}{d_{ID}}$, and then an average value of $D$ of $N$ cathode material particles is calculated and denoted as $\overline{D}$.

It should be noted that the sample image may be a TEM, SEM, or other images that can show the thickness of the coating layer and size of the active material matrix of the ternary cathode material.

In some embodiments, the number $N$ of the ternary cathode material particles is ≥10. A larger sample size is more likely to capture the overall diversity, and is conducive to reducing sampling error. Different samples may be selected for testing and calculating each parameter, and the number of selected samples may be the same or different.

In some embodiments, the active material matrix has a general formula of $Li_xNi_aCo_bM_cM'_{1-a-b-c}A_yO_{2-y}$, wherein M is at least one selected from the group consisting of Al and Mn; M' is at least one selected from the group consisting of Zr, Sr, Mo, Ba, W, B, Ti, Mg, Li, C, Si, Ca, Cu, La, Ce, Bi, In, Nb, and Y; A is at least one selected from the group consisting of P and F; wherein $0.95 \leq x < 1.1$, $a > 0$, $b > 0$, $c > 0$, $0.95 \leq (a+b+c) \leq 1$, $0 \leq y \leq 0.01$; and/or,

the coating layer is at least one selected from the group consisting of $V_2O_5$, $Al_2O_3$, $ZrO_2$, $TiO_2$, $SnO_2$, $ZnO$, $MgO$, $RuO_2$, $La_2O_3$, $CeO_2$, $Co_3O_4$, $SiO_2$, $FePO_4$, $Li_3PO_4$, $Li_2MnO_3$, $LiAlO_2$, $Li_2TiO_3$, $Li_2ZrO_3$, $Li_3VO_4$, $Li_2SiO_3$, $AlF_3$, $LaF_3$, and $MgF_2$.

The active material matrix may be doped with a doping element as actual required, to improve the performance of particular aspects of the resulting cathode material. Coating the active material matrix with, e.g., an oxide, a fluoride, or a fast ionic conductor helps to improve the conductivity and cycling stability of the resulting ternary cathode material while isolating the active material matrix from the electrolyte solution.

An embodiment of the present disclosure provides a method for preparing the ternary cathode material according to any one of the above embodiments, including:

pre-coating: dry coating the active material matrix with a first coating agent and performing a first calcination, to obtain a pre-coated ternary cathode material; and

coating: wet coating the pre-coated ternary cathode material with a mixed coating agent and performing a second calcination, to obtain the ternary cathode material.

A uniform coating layer is formed on the surface of the ternary cathode material by means of dry coating and wet secondary coating. The first coating is performed by dry coating, which may specifically include: mixing a first coating agent, the active material matrix, and a dispersant, such as water and ethanol, by ball milling, and then pre-coating on the surface of the active material matrix. This pre-coating may not form a uniform coating layer, but can reduce an exposure area of the active material matrix to the liquid during contacting with an solvent and water in subsequent secondary coating, thereby inhibiting the structure deterioration of the material by water.

Then, the second coating is performed on the pre-coated ternary cathode material by wet coating, which may specifically include: mixing a mixed coating agent, the pre-coated ternary cathode material, and a solvent to form a slurry, so that the coating agent particles deposit on the surface of the pre-coated ternary cathode material, thereby not only compensating for the defects of primary coating and achieving uniform coating, but also increasing the structural stability of the coating layer, improving the uniformity of the coating layer, and allowing $S_N^2$ to be within a preset range. The uniform coating layer formed by coating twice effectively isolates the active material matrix from air, so that $H_2O$ and $CO_2$ in air can hardly further react with residual lithium on the surface to form $Li_2CO_3$ or $LiOH$, thereby inhibiting side reactions on the cathode electrode/electrolyte interface, suppressing massive losses of $Li^+$, reducing the dissolution of transition metal ions, preventing structural collapse of the ternary cathode material during cycling, and improving the structural stability and cycling performance of the electrode material.

In some embodiments, the preparation method satisfies at least one of features A-F below:

A. the first coating layer is at least one selected from the group consisting of $V_2O_5$, $Al_2O_3$, $ZrO_2$, $TiO_2$, $SnO_2$, $ZnO$, $MgO$, $RuO_2$, $La_2O_3$, $CeO_2$, $Co_3O_4$, $SiO_2$, $FePO_4$, $Li_3PO_4$, $Li_2MnO_3$, $LiAlO_2$, $Li_2TiO_3$, $Li_2ZrO_3$, $Li_3VO_4$, $Li_2SiO_3$, $AlF_3$, $LaF_3$, and $MgF_2$;

B. a mass ratio of the first coating agent to the active material matrix is 0.05%-2%, and specifically may be 0.05%, 0.06%, 0.08%, 0.10%, 0.12%, 0.14%, 0.16%, 0.18%, 2%, or any value within the range of 0.05%-2%;

C. the first calcination is performed at a temperature of 400 °C-700 °C, specifically, 400 °C, 500 °C, 600 °C, 700 °C, or any value within the range of 400 °C-700 °C, under an oxygen atmosphere for 3 h-10 h, for example, 3 h, 4 h, 6 h, 8 h, 10 h, or any value within the range of 3 h-10 h;

D. a preparation method of the active material matrix includes: calcining a mixture including a precursor of the ternary cathode material, a dopant, and a lithium source or a mixture including a precursor of the ternary cathode material and a lithium source, to obtain the active material matrix;

E. the coating includes: drying and granulating a slurry including the pre-coated ternary cathode material, the mixed coating agent, and a solvent to obtain a powder; and performing water washing, drying, the second calcination, and crushing on the powder successively, to obtain the ternary cathode material; and

F. the second calcination is performed at a temperature of 400 °C-700 °C, specifically, 400 °C, 500 °C, 600 °C, 700 °C, or any value within the range of 400 °C-700 °C, under an oxygen atmosphere for 3 h-10 h, specifically, 3 h, 4 h, 6 h, 8 h, 10 h, or any value within the range of 3 h-10 h.

Because the coating layer obtained by dry coating has relatively poor uniformity, the amount of the first coating agent should not be excessive, to avoid failure to compensate by wet coating for the defects in the uniformity of the coating layer obtained from the first coating.

In some embodiments, the active material matrix may be a commercially available active material or be prepared by the following method: proportionally mixing the precursor of the ternary cathode material, the dopant (if any), and the lithium source according to the stoichiometric ratio, ball milling the mixture at a revolving speed of 150 rpm-500 rpm for 1 h -10 h, after fully mixing the mixture, calcining the mixture at 700 °C-1,000 °C under an air or oxygen atmosphere for 15 h-30 h, to obtain a nickel-cobalt-manganese ternary cathode material;

Wherein an element of the dopant includes at least one of Zr, Sr, Mo, Ba, W, B, Ti, Mg, Li, C, Si, Ca, Cu, La, Ce, Bi, In, Nb, Y, Al, Mn, P, and F; the doping may be an oxide, a fluoride, a carbonate, a hydroxide, a nitride, a boride, a nitrate, or any combination thereof corresponding to the doping element; a molar ratio of the dopant to the precursor may be 0.01-0.0.05:1; the precursor of the ternary cathode material may be $Ni_xCo_yMn_{1-x-y}(OH)_2$, where $0.25<x<0.9$, $0<y<1$, and $x+y<1$; and the lithium source may be at least one of lithium hydroxide, lithium nitrate, lithium carbonate, lithium oxalate, or lithium acetate, or a hydrate thereof.

In some embodiments, the coating satisfies at least one of features a-h below:

a. a mass ratio of the mixed coating agent to the pre-coated ternary cathode material in the slurry is 5%-25%, and specifically may be 5%, 10%, 15%, 20%, 25%, or any value within the range of 5%-25%;

b. the mixed coating agent includes a second coating agent and a surfactant, a mass ratio of the surfactant to the second coating agent in the mixed coating agent of (15-25):1, for example, 15:1, 17:1, 19:1, 21:1, 23:1, 25:1, or any value within the range of (15-25):1;

c. the mixed coating agent includes the second coating agent and the surfactant, the surfactant is at least one selected from the group consisting of sodium dodecylbenzenesulfonate, Tween-80, polymethacrylic acid, polyethylene glycol, and ammonium polymethacrylate;

d. the mixed coating agent includes the second coating agent and the surfactant, the second coating agent is at least one selected from the group consisting of $V_2O_5$, $Al_2O_3$, $ZrO_2$, $TiO_2$, $SnO_2$, $ZnO$, $MgO$, $RuO_2$, $La_2O_3$, $Mn_3(PO_4)_2$, $AlPO_4$, $CeO_2$, $Co_3O_4$, $SiO_2$, $FePO_4$, $Li_3PO_4$, $Li_2MnO_3$, $LiAlO_2$, $Li_2TiO_3$, $Li_2ZrO_3$, $Li_3VO_4$, $Li_2SiO_3$, $AlF_3$, $LaF_3$, and $MgF_2$;

e. a solid content of the slurry is 100 g/L-200 g/L, specifically, 100 g/L, 120 g/L, 140 g/L, 160 g/L, 180 g/L, 200 g/L, or any value within the range of 100 g/L-200 g/L;

f. the solvent is at least one selected from the group consisting of methanol, ethanol, isopropanol, and butanol;

g. the drying is performed at a temperature of 60 °C-200 °C, and specifically may be, 60 °C, 100 °C, 150 °C, 200 °C, or any value within the range of 60 °C-200 °C; the drying is performed for 10 h-25 h, and specifically may be, 10 h, 15 h, 20 h, 25 h, or any value within the range of 10 h -25 h; and

h. the mixed coating agent is airflow crushed for preparing the slurry, the airflow crushing is performed at a pressure of 5 MPa-12 MPa for a duration of 2.5 h-8 h.

During the second coating, sufficient surfactant is introduced into the mixed coating agent to avoid aggregation of the second coating agent. Moreover, airflow crushing of the mixed coating agent before preparing the slurry may refine the mixed coating agent and ensure thorough mixing, which helps to prevent agglomeration of the second coating agent, and facilitates uniform mixing of the second coating agent and the pre-coated ternary cathode material, thereby compensating for the defects in relatively poor uniformity of the coating layer during the first coating.

Spray drying may be selected for drying and granulating the slurry, as it not only improves the sphericity of the powder, but also produces relatively dense particles. This helps reduce damage to the particles during a subsequent water washing step. The conditions of spray drying may include an inlet temperature of 200 °C-260 °C and an outlet air temperature of 100 °C-210 °C.

Since the ternary cathode material is susceptible to chemical delithiation when exposed to water, which deteriorates the material structure and electrochemical performance, in the present disclosure, the powder after granulation is washed with water to remove lithium oxides formed by calcination of the excess lithium source. Moreover, the coating layer obtained from the prior pre-coating protects the cathode material, mitigating structure deterioration of the material caused by chemical delithiation during the water washing, while effectively reducing the residual lithium content in the active material.

An embodiment of the present disclosure provides a method for screening the ternary cathode material according to the above embodiments, wherein the ternary cathode material satisfies the following conditions :

① the ternary cathode material includes the active material matrix and the coating layer coated on the active material matrix; and

② the ternary cathode material has a coating effectiveness factor $A$ of 0.001 $GPa/nm^2$-0.2 $GPa/nm^2$, wherein $A = \frac{\overline{D} \times \overline{E}}{S_N{}^2}$, $\overline{D}$ is an average value of a ratio of a thickness of the coating layer of the ternary cathode material particles to a diameter of the active material matrix, and is unitless; $\overline{E}$ is an average Young's modulus of the ternary cathode material particles, and is in a unit of GPa; $S_N{}^2$ is a variance of the thickness of the coating layer of the ternary cathode material particles, and is in a unit of $nm^2$.

The coating effectiveness factor $A$ of the ternary cathode material within the range of 0.001 $GPa/nm^2$-0.2

$GPa/nm^2$ means that the coating layer and the active material of the ternary cathode material simultaneously satisfy a mutually coordinated relationship among $S_N{}^2$, $\overline{D}$, and $\overline{E}$. The cathode material satisfying the coating effectiveness factor features high structural stability, high cycling performance, low capacity decay rate, and low residual alkali content.

An embodiment of the present disclosure provides a cathode sheet, including the ternary cathode material according to the above embodiments or the ternary cathode material prepared by the preparation method according to any one of the above embodiments.

An embodiment of the present disclosure provides a secondary battery, including the ternary cathode material according to any one of the above embodiments.

In the cathode sheet of the present disclosure, the cathode material layer generally includes the cathode material, a binder, and a conductive agent, and is generally formed by coating a cathode slurry, followed by drying and cold pressing. The cathode slurry is generally formed by dispersing the cathode material, the conductive agent, and the binder in a solvent, and fully stirring the mixture. The solvent may be N-methylpyrrolidone (NMP).

In some optional embodiments, the cathode material layer may include 70 wt%-97 wt% of the ternary cathode material, based on a total weight of the cathode material layer. Optionally, a weight proportion of the ternary cathode material in the cathode material layer is 85%-97%, 90%-97%, or 95%-97%. The energy density and cycle life of the lithium-ion battery may be further improved by adjusting the proportion of the ternary cathode material in the cathode material layer.

In some embodiments, the binder of the cathode material layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or a modified polymer thereof.

The conductive agent may improve the electronic conductivity of the cathode material layer. In some optional embodiments, the cathode material layer may include 2 wt%-20 wt% of the conductive agent, based on the total weight of the cathode material layer. Optionally, the weight proportion of the conductive agent in the cathode material layer is 2%-10% or 2%- 5%.

In some embodiments, the conductive agent of the cathode material layer may include one or more of superconducting carbon, carbon black (e.g., Super P, acetylene black, or Ketjen black), carbon dots, carbon nanotubes, graphene, or carbon nanofibers.

The present disclosure provides a lithium-ion battery, including the cathode sheet according to the above embodiments, and further includes a negative electrode sheet, an electrolyte solution, and a separator.

[Negative electrode sheet]

The negative electrode sheet in the present disclosure includes a negative electrode current collector and a negative electrode film layer arranged on at least one surface of the negative electrode current collector.

As an example, the negative electrode current collector has two opposite surfaces in its thickness direction, and the negative electrode film layer is laminated on either one or both of the two opposite surfaces of the negative electrode current collector.

The negative electrode current collector may be made of a material with good conductivity and mechanical strength, which functions for electrical conduction and current collection. In some embodiments, a copper foil may be used as the negative electrode current collector.

In the negative electrode sheet of the present disclosure, the negative electrode film layer generally includes a negative electrode active material, a binder, a conductive agent, and other optional adjuvants, and is generally formed by coating a negative electrode slurry on the negative electrode current collector, followed by drying and cold pressing. The negative electrode slurry is generally formed by dispersing the negative electrode material, an optional conductive agent, an optional binder, and an optional adjuvant in a solvent and fully stirring the mixture. The solvent may be N-methylpyrrolidone (NMP) or deionized water.

In some embodiments, the negative electrode active material may include one or more of artificial graphite, natural graphite, a silicon-based material, or a tin-based material. Optionally, the negative electrode active material includes one or more of artificial graphite and natural graphite. Optionally, the negative electrode active material includes artificial graphite.

In some embodiments, the conductive agent may include one or more of superconducting carbon, carbon black (e.g., Super P, acetylene black, or Ketjen black), carbon dots, carbon nanotubes, graphene, and carbon nanofibers.

In some embodiments, the binder may include one or more of styrene butadiene rubber (SBR), aqueous acrylic resin, polyvinyl alcohol (PVA), sodium alginate (SA), or carboxymethyl chitosan (CMCS).

In some embodiments, other optional adjuvants are, e.g., a thickener (e.g., sodium carboxymethyl cellulose (CMC-Na)) or a PTC thermistor material.

[Electrolyte]

The electrolyte functions to conduct ions between the cathode sheet and the negative electrode sheet. The type of the electrolyte is not specifically limited in the present disclosure, and may be selected as required. For example, the electrolyte may be selected from an electrolyte solution. The electrolyte solution includes an electrolyte salt and a solvent.

In some embodiments, the electrolyte salt may be one or more selected from the group consisting of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluor-ophosphate ($LiPO_2F_2$), lithium difluorobis(oxalato)phosphate (LiDFOP), and lithium tetrafluoro(oxalato)phosphate (LiTFOP).

In some embodiments, the solvent may be one or more selected from the group consisting of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolyte solution further optionally includes an additive. For example, the additive may include a negative electrode film-forming additive, or may include a positive electrode film-forming additive, or may further include an additive that can improve some performance of the battery, such as an additive that improves overcharge performance of the battery, an additive that improves high-temperature performance of the battery, or an additive that improves low-temperature performance of the battery.

[Separator]

The separator is arranged between the cathode sheet and the negative electrode sheet, to serve for separation. The type of the separator for the lithium-ion battery is not particularly limited in the present disclosure, and any well-known porous-structured separator for a lithium-ion battery may be used. For example, the separator may be one or more selected from the group consisting of a glass fiber film, a nonwoven fabric film, a polyethylene film, a polypropylene film, a polyvinylidene fluoride film, and a multilayer composite film including one or more thereof.

The cathode sheet, the negative electrode sheet, and the separator may be stacked or wound to form an electrode assembly, with the separator located between the positive and negative electrode sheets to serve for separation. The electrode assembly is placed in an outer package, which is then filled with the electrolyte solution and sealed, thus obtaining the lithium-ion battery.

The outer package of the lithium-ion battery is configured to encapsulate the electrode assembly and the electrolyte. In some embodiments, the outer package of the lithium-ion battery may be a hard shell, such as a hard plastic shell, an aluminum shell, or a steel shell. The outer package of the lithium-ion battery may also be a pouch, such as a bag-type pouch. The pouch may be made of plastic, e.g., including one or more of polypropylene (PP), polybutylene terephthalate (PBT), or polybutylene succinate (PBS).

The shape of the lithium-ion battery is not particularly limited in the present disclosure, and may be cylindrical, square, or any other shape.

In some embodiments, the lithium-ion batteries may be assembled into a battery module, and the battery module may include a plurality of lithium-ion batteries. The specific number of lithium-ion batteries may be adjusted based on the application and capacity of the battery module.

In some embodiments, the above battery modules may be further assembled into a battery pack. The number of battery modules included in the battery pack may be adjusted based on the application and capacity of the battery pack.

The present disclosure further provides an electrical device, including at least one of the secondary battery, the battery module, or the battery pack according to the present disclosure. The secondary battery, the battery module, or the battery pack may be used as a power source for the device, or may be used as an energy storage unit for the device. The device may be, but is not limited to, a mobile device (e.g., a mobile phone and a notebook computer), an electric vehicle (e.g., an full-electric vehicle, a hybrid electric vehicle, a plug-in hybrid electric vehicle, an electric bicycle, an electric scooter, an electric golf cart, or an electric truck), an electric train, a ship and a satellite, an energy storage system, and the like. The secondary battery, the battery module, or the battery pack may be selected for the device based on use requirements thereof.

The features and performance of the present disclosure are further detailed below with reference to the examples.

Example 1:

This example provided a method for preparing a ternary cathode material, specifically including the following steps.

A precursor of a nickel-cobalt-manganese hydroxide $Ni_{0.8}Co_{0.1}Mn_{0.1}(OH)_2$ and lithium carbonate were poured at a molar ratio of nickel-cobalt-manganese hydroxide to lithium carbonate of 1:1.04 into a high-speed mixer and mixed at a revolving speed of 500 rpm for 5 min to obtain a mixture. The mixture was dispersed by stirring at a revolving speed of 1,000 rpm for 15 min and transferred into a bowl. Then, the mixture was heated to 850 °C under an oxygen atmosphere with a programmed temperature ramp, held at the temperature for 25 h, and then cooled to room temperature. The mixture was further pulverized by a mechanical mill, with a particle size D50 controlled to 9.3 $\mu$m, to obtain a nickel-cobalt-manganese ternary cathode material.

A mixture including nano-alumina, the resulting nickel-cobalt-manganese ternary cathode material, and ethanol was mixed at a revolving speed of 500 rpm for 3 min, and then mixed at a revolving speed of 1,000 rpm for 30 min to obtain a first mixture, wherein the mass of nano-alumina was 0.2 wt% of the resulting nickel-cobalt-manganese ternary cathode material, and the mass of ethanol was 15 wt% of the total mass of nano-alumina and the resulting nickel-cobalt-manganese ternary cathode material. The first mixture was subjected to a secondary calcination at a secondary calcination temperature of 500 °C under an oxygen atmosphere for 6 h, and then cooled naturally to obtain a pre-coated ternary cathode material.

Sodium dodecylbenzenesulfonate and nano-alumina at a mass ratio of sodium dodecylbenzenesulfonate to nano-alumina of 20:1 were mixed, and a resulting mixture was airflow crushed at a pressure of 8 MPa for 4 h, to obtain a mixed coating agent.

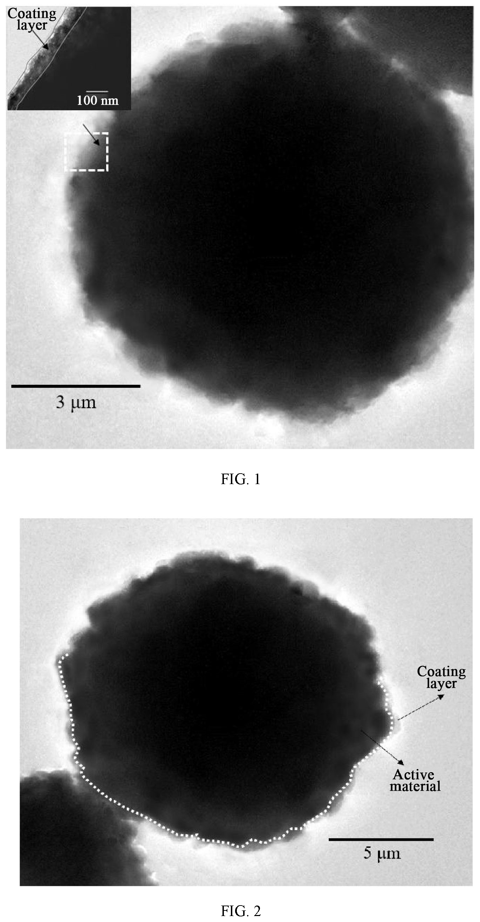

The mixed coating agent, the pre-coated ternary cathode material, and ethanol were mixed to form a slurry, which was stirred at a revolving speed of 1,000 rpm for 30 min, wherein the mixed coating agent was 10% of the mass of the pre-coated ternary cathode material, and the concentration of the slurry was 150 g/L. The slurry was spray-dried based on spray-drying parameters of: an inlet temperature of 260 °C and an outlet air temperature of 120 °C, to obtain a powder. The powder was washed twice with deionized water, then dried at a temperature of 100 °C for 20 h, then subjected to a third calcination at 500 °C under an oxygen atmosphere for 8 h, and then crushed to obtain an alumina-coated ternary cathode material, with a TEM image as shown in FIG. 1, thus obtaining a coating layer with a relatively uniform thickness.

Example 2:

This example provided a method for preparing a ternary cathode material, specifically including the following steps.

A precursor of a nickel-cobalt-aluminum hydroxide $Ni_{0.83}Co_{0.15}Al_{0.02}(OH)_2$ and lithium carbonate were poured at a molar ratio of nickel-cobalt-aluminum hydroxide to lithium carbonate of 1:1.04 into a high-speed mixer and mixed at a revolving speed of 500 rpm for 5 min to obtain a mixture. The mixture was dispersed by stirring at a revolving speed of 1,000 rpm for 15 min and transferred into a bowl. Then, the mixture was heated to 850 °C under an oxygen atmosphere with a programmed temperature ramp, held at the temperature for 25 h, and then cooled to room temperature. The mixture was further pulverized by a mechanical mill, with a particle size D50 controlled to 15.0 $\mu$m, to obtain a nickel-cobalt-aluminum ternary cathode material.

A mixture including nano-alumina, the resulting nickel-cobalt-aluminum ternary cathode material, and ethanol was mixed at a revolving speed of 500 rpm for 3 min, and then mixed at a revolving speed of 1,000 rpm for 20 min to obtain a first mixture, wherein the mass of nano-alumina was 0.05 wt% of the resulting nickel-cobalt-aluminum ternary cathode material, and the mass of ethanol was 15 wt% of the total mass of nano-alumina and the resulting nickel-cobalt-aluminum ternary cathode material. The first mixture was subjected to a secondary calcination at a secondary calcination temperature of 500 °C under an oxygen atmosphere for 6 h, and then cooled naturally to obtain a pre-coated ternary cathode material.

Sodium dodecylbenzenesulfonate and nano-alumina at a mass ratio of sodium dodecylbenzenesulfonate to nano-alumina of 25:1 were mixed, and a resulting mixture was airflow crushed at a pressure of 6 MPa for 4 h, to obtain a mixed coating agent.

The mixed coating agent, the pre-coated ternary cathode material, and ethanol were mixed to form a slurry, which was stirred at a revolving speed of 1,000 rpm for 30 min, wherein the mixed coating agent was 8% of the mass of the pre-coated ternary cathode material, and the concentration of the slurry was 150 g/L. The slurry was spray-dried based on spray-drying parameters of: an inlet temperature of 220 °C and an outlet air temperature of 210 °C, to obtain a powder. The powder was washed twice with deionized water, then dried at a temperature of 100 °C for 20 h, then subjected to a third calcination at 500 °C under an oxygen atmosphere for 8 h, and then crushed to obtain an alumina-coated ternary cathode material.

Example 3:

This example provided a method for preparing a ternary cathode material, specifically including the following steps.

A precursor of a nickel-cobalt-manganese hydroxide $Ni_{0.8}Co_{0.1}Mn_{0.1}(OH)_2$, lithium fluoride, and lithium chloride were poured at a molar ratio of nickel-cobalt-manganese hydroxide to lithium fluoride to lithium chloride of 1:1.02:0.04 into a high-speed mixer and mixed at a revolving speed of 500 rpm for 5 min to obtain a mixture. The mixture was dispersed by stirring at a revolving speed of 1,000 rpm for 15 min and transferred into a bowl, Then, the mixture was heated to 850 °C under an oxygen atmosphere with a programmed temperature ramp, held at the temperature for 25 h, and then cooled to room temperature. The mixture was further pulverized by a mechanical mill, with a particle size D50 controlled to 10.1 μm, to obtain a nickel-cobalt-manganese ternary cathode material.

A mixture including nano-titanium dioxide, the resulting nickel-cobalt-manganese ternary cathode material, and ethanol was mixed at a revolving speed of 500 rpm for 3 min, and then mixed at a revolving speed of 1,000 rpm for 30 min to obtain a first mixture, wherein the mass of nano-titanium dioxide was 0.05 wt% of the resulting nickel-cobalt-manganese ternary cathode material, and the mass of ethanol was 15 wt% of the total mass of nano-titanium dioxide and the resulting nickel-cobalt-manganese ternary cathode material. The first mixture was subjected to a secondary calcination at a secondary calcination temperature of 500 °C under an oxygen atmosphere for 6 h, and then cooled naturally to obtain a pre-coated ternary cathode material.

Sodium dodecylbenzenesulfonate and nano-titanium dioxide at a mass ratio of sodium dodecylbenzenesulfonate to nano-titanium dioxide of 20:1 were mixed, and a resulting mixture was airflow crushed at a pressure of 9 MPa for 3 h, to obtain a mixed coating agent.

The mixed coating agent, the pre-coated ternary cathode material, and ethanol were mixed to form a slurry, which was stirred at a revolving speed of 1,000 rpm for 30 min, wherein the mixed coating agent was 10% of the mass of the pre-coated ternary cathode material, and the concentration of the slurry was 150 g/L. The slurry was spray-dried based on spray-drying parameters of: an inlet temperature of 200 °C and an outlet air temperature of 100 °C, to obtain a powder. The powder was washed twice with deionized water, then dried at a temperature of 100 °C for 20 h, then subjected to a third calcination at 500 °C under an oxygen atmosphere for 8 h, and then crushed to obtain a nano-titanium dioxide-coated ternary cathode material.

The main differences between Examples 4-12 and Comparative Examples 1-2 relative to Example 1 are shown in Table 1. In addition to the differences listed in Table 1, Example 7 further has the following differences: both the first and second coating agents are zinc oxide.

Table 1

| Item | Mass ratio of first coating agent to nickel-cobalt-manganese ternary cathode material, % | Calcin ation for pre-coating | Surfactant | Mass ratio of surfactant to second coating agent | Mass ratio of mixed coating agent to pre-coated ternary cathode material, % | Calcination for coating |
|---|---|---|---|---|---|---|
| Example 1 | 0.2 | 500 °C , 6 h | Sodium dodecylbenzenesulfonate | 20:1 | 10 | 500 °C, 8 h |
| Example 4 | 0.05 | 500 °C , 7 h | Polymethacrylic acid | 24:1 | 8 | 500 °C, 9 h |
| Example 5 | 1 | 400 °C , 10 h | Sodium dodecylbenzenesulfonate | 18:1 | 12 | 400 °C, 7 h |
| Example 6 | 0.17 | 700 °C , 3 h | Sodium dodecylbenzenesulfonate | 19:1 | 10 | 700 °C, 3 h |
| Example 7 | 0.12 | 500 °C , 9 h | Sodium dodecylbenzenesulfonate | 20:1 | 10 | 500 °C, 10 h |
| Example 8 | 1.5 | 500 °C , 6 h | Sodium dodecylbenzenesulfonate | 15:1 | 5 | 500 °C, 8 h |
| Example 9 | 1.9 | 500 °C , 6 h | Sodium dodecylbenzenesulfonate | 25:1 | 25 | 500 °C, 8 h |

(continued)

| Item | Mass ratio of first coating agent to nickel-cobalt-manganese ternary cathode material, % | Calcin ation for pre-coating | Surfactant | Mass ratio of surfactant to second coating agent | Mass ratio of mixed coating agent to pre-coated ternary cathode material, % | Calcination for coating |
|---|---|---|---|---|---|---|
| Example 10 | 1.93 | 500 °C , 6 h | Sodium dodecylbenzenesulfonate | 25:1 | 20 | 500 °C, 8 h |
| Example 11 | 1.98 | 500 °C , 6 h | Sodium dodecylbenzenesulfonate | 15:1 | 20 | 500 °C, 8 h |
| Example 12 | 1.51 | 500 °C , 6 h | Sodium dodecylbenzenesulfonate | 15:1 | 10 | 500 °C, 8 h |
| Comparative Example 1 | 3.5 | 500 °C , 6 h | Sodium dodecylbenzenesulfonate | 20:1 | 10 | 500 °C, 8 h |
| Comparative Example 2 | 0.05 | 500 °C , 7 h | Sodium dodecylbenzenesulfonate | 15:1 | 20 | 500 °C, 8 h |

Comparative Example 3:

This example provided a method for preparing a ternary cathode material, and was different from Example 1 only in that water washing was performed during the preparation of the pre-coated ternary cathode material. The method specifically includes the following steps.

A precursor of a nickel-cobalt-manganese hydroxide $Ni_{0.8}Co_{0.1}Mn_{0.1}(OH)_2$ and lithium carbonate were poured at a molar ratio of nickel-cobalt-manganese hydroxide to lithium carbonate of 1:1.04 into a high-speed mixer and mixed at a revolving speed of 500 rpm for 5 min to obtain a mixture. The mixture was dispersed by stirring at a revolving speed of 1,000 rpm for 15 min and transferred into a bowl. Then, the mixture was heated to 850 °C under an oxygen atmosphere with a programmed temperature ramp, held at the temperature for 25 h, and then cooled to room temperature. The mixture was further pulverized by a mechanical mill, with a particle size D50 controlled to 9.3 $\mu$m, to obtain a nickel-cobalt-manganese ternary cathode material.

A mixture including nano-alumina, the resulting nickel-cobalt-manganese ternary cathode material, and ethanol was mixed at a revolving speed of 500 rpm for 3 min, and then mixed at a revolving speed of 1,000 rpm for 30 min to obtain a first mixture, wherein the mass of nano-alumina was 0.2 wt% of the resulting nickel-cobalt-manganese ternary cathode material, and the mass of ethanol was 15 wt% of the total mass of nano-alumina and the resulting nickel-cobalt-manganese ternary cathode material. The first mixture was subjected to a secondary calcination at a secondary calcination temperature of 500 °C under an oxygen atmosphere for 6 h, cooled naturally, then washed twice with deionized water, and then dried at a temperature of 100 °C for 20 h, to obtain a pre-coated ternary cathode material.

Sodium dodecylbenzenesulfonate and nano-alumina at a mass ratio of sodium dodecylbenzenesulfonate to nano-alumina of 20:1 were mixed, and a resulting mixture was airflow crushed at a pressure of 8 MPa for 4 h, to obtain a mixed coating agent.

The mixed coating agent, the pre-coated ternary cathode material, and ethanol were mixed to form a slurry, which was stirred at a revolving speed of 1,000 rpm for 30 min, wherein the mixed coating agent was 10% of the mass of the pre-coated ternary cathode material, and the concentration of the slurry was 150 g/L. The slurry was spray-dried based on spray-drying parameters of: an inlet temperature of 260 °C and an outlet air temperature of 120 °C, to obtain a powder. The powder was subjected to a third calcination at 500 °C under an oxygen atmosphere for 8 h, and then crushed to obtain an alumina-coated ternary cathode material.

Comparative Example 4:

This example provided a method for preparing a ternary cathode material, and was different from Example 1 only in that the mixed coating agent was not prepared, and sodium dodecylbenzenesulfonate and nano-alumina were directly mixed with the pre-coated ternary cathode material and a solvent to prepare a slurry. The method specifically includes the following steps.

A precursor of a nickel-cobalt-manganese hydroxide $Ni_{0.8}Co_{0.1}Mn_{0.1}(OH)_2$ and lithium carbonate were poured at a molar ratio of nickel-cobalt-manganese hydroxide to lithium carbonate of 1:1.04 into a high-speed mixer and mixed at a revolving speed of 500 rpm for 5 min to obtain a mixture. The mixture was dispersed by stirring at a revolving speed of 1,000 rpm for 15 min and transferred into a bowl. Then, the mixture was heated to 850 °C under an oxygen atmosphere with a programmed temperature ramp, held at the temperature for 25 h, and then cooled to room temperature. The mixture was further pulverized by a mechanical mill, with a particle size D50 controlled to 9.3 μm, to obtain a nickel-cobalt-manganese ternary cathode material.

A mixture including nano-alumina, the resulting nickel-cobalt-manganese ternary cathode material, and ethanol was mixed at a revolving speed of 500 rpm for 3 min, and then mixed at a revolving speed of 1,000 rpm for 30 min to obtain a first mixture, wherein the mass of nano-alumina was 0.2 wt% of the resulting nickel-cobalt-manganese ternary cathode material, and the mass of ethanol was 15 wt% of the total mass of nano-alumina and the resulting nickel-cobalt-manganese ternary cathode material. The first mixture was subjected to a secondary calcination at a secondary calcination temperature of 500 °C under an oxygen atmosphere for 6 h, and then cooled naturally to obtain a pre-coated ternary cathode material.

Nano-alumina, sodium dodecylbenzenesulfonate, the pre-coated ternary cathode material, and ethanol were mixed to form a slurry, which was stirred at a revolving speed of 1,000 rpm for 30 min, wherein the total mass of nano-alumina and sodium dodecylbenzenesulfonate was 10% of the mass of the pre-coated ternary cathode material, the mass ratio of sodium dodecylbenzenesulfonate to nano-alumina was 20:1, and the concentration of the slurry was 150 g/L. The slurry was spray-dried based on spray-drying parameters of: an inlet temperature of 260 °C and an outlet air temperature of 120 °C. The powder was washed twice with deionized water, then dried at a temperature of 100 °C for 20 h, then subjected to a third calcination at 500 °C under an oxygen atmosphere for 8 h, and then crushed to obtain an alumina-coated ternary cathode material.

Comparative Example 5:

This example provided a method for preparing a ternary cathode material, and was different from Example 1 only in that the total amount of nano-alumina was equal to that in Example 1, and only one dry coating was performed, with the TEM image as shown in FIG. 2.

Comparative Example 6:

This example provided a method for preparing a ternary cathode material, and was different from Example 1 only in that the total amount of nano-alumina was equal to that in Example 1, and only one wet coating was performed.

The ternary cathode material prepared in each of the above examples and comparative examples was tested. The specific items and methods were as follows.

1. Residual alkali test steps:

(1) Sample treatment: 10 g of sample was weighed and added in a 250 mL dry beaker, followed by adding 100 mL of pure water, and then a stirring magneton was added into the beaker, which was covered with a plastic wrap. A resulting mixture was stirred with a magnetic stirrer for 30 min, left to stand for 2 min after the stirring was completed, filtered through half-folded round filter paper placed in a clean funnel placed on a clean conical flask, which was covered with a rubber flask cap after the filtration. After acid-base titration reached an endpoint with hydrochloric acid as a titrant, the content of lithium hydroxide and lithium carbonate was determined based on the usage amount of hydrochloric acid and an inflection point of the titration.

2. Assembly of a coin battery:

To test the electrochemical performance of the material, a 2032-type coin battery was fabricated in the present disclosure to conduct various electrochemical performance tests. Specific steps for fabricating the coin battery were as follows: preparation of the cathode sheet: the cathode material prepared in each of the examples and comparative examples was first vacuum baked in a vacuum oven at 85 °C for 6 h. Then, an active material, polyvinylidene fluoride, and acetylene black were weighed at a mass ratio of 90:6:4, and simultaneously added into a homogenizer, into which a certain amount of N-methylpyrrolidone and zirconium beads were simultaneously added. The homogenizer was run at a revolving speed of 500 rpm for 5 min, and then run at a revolving speed of 2,000 rpm for 15 min, to fully mix the binder, the conductive agent, and the active material. The mixed slurry was uniformly coated onto a flat aluminum foil. The coated electrode sheet was baked in a thermostatic vacuum oven at a set baking temperature of 120 °C for 10 h. The baked electrode sheet was calendared and punched to obtain a cathode sheet with a diameter of 12 mm. In an argon-filled glove box, the CR2032 battery was assembled by sequentially loading the cathode sheet, the negative electrode (lithium foil), a separator, and a spacer into a battery shell, adding dropwise an electrolyte solution, and then sealing the shell, to obtain a coin battery ready for testing.

The conditions of long-cycle test were as follows: the window voltages were 3.0 V and 4.3 V, the charge/discharge rate was 1 C (1 C=200 mA/g), and a test temperature was 25 °C.

3. Young's modulus: The Young's modulus was measured by nanoindentation testing in an argon-filled glove box using an Agilent Nano Indenter G200 of Keysight company. $E$ was measured by a Oliver Pharr method using a Berkovich indenter.

(1) 10 particles were randomly selected from each batch of uncycled samples and tested to obtain an average value, i.e., the Young's modulus E of the material.

(2) Testing of cycled samples for Young's modulus: a cycled NMC electrode was taken out from the coin battery, washed several times with dimethyl carbonate (DMC), and dried in a vacuum oven at room temperature overnight to obtain a cycled test sample. 10 particles were randomly selected from each batch of samples, and tested to obtain an average value.

(3) $\overline{D}$ and $S_N^2$: The cathode material obtained in each of examples and comparative examples was tested for the TEM image, which was analyzed using Matlab and ImageJ in combination. 10 particles were randomly selected from each batch of samples, to calculate $\overline{D}$ and $S_N^2$.

The above test results are as shown in Tables 2 and 3.

Table 2

| No. | Active material matrix | Active material matrix, $D_{50}$/μm | Type of coating agent | $\overline{D}$/10⁻³ | Uncycled $\overline{E}$/GPa | $S_N^2$ | Coating effectiveness factor/10⁻³ |
|---|---|---|---|---|---|---|---|
| Example 1 | $LiNi_{0.8}Co_{0.1}Mn_{0.1}O_2$ | 9.3 | Alumina | 10.33 | 252 | 16.17 | 160.99 |
| Example 2 | $LiNi_{0.83}Co_{0.15}Al_{0.02}O_2$ | 15.0 | Alumina | 1.25 | 168 | 14.59 | 14.39 |
| Example 3 | $LiNi_{0.8}Co_{0.1}Mn_{0.1}O_{1.96}F_{0.04}$ | 10.1 | Titanium dioxide | 1.46 | 204 | 11.5 | 25.9 |
| Example 4 | $LiNi_{0.8}Co_{0.1}Mn_{0.1}O_2$ | 10.1 | Alumina | 1.26 | 213 | 15.19 | 17.67 |
| Example 5 | $LiNi_{0.8}Co_{0.1}Mn_{0.1}O_2$ | 5.1 | Alumina | 97.39 | 338 | 2021.92 | 16.28 |
| Example 6 | $LiNi_{0.8}Co_{0.1}Mn_{0.1}O_2$ | 3.0 | Alumina | 26.08 | 237 | 91.49 | 67.56 |
| Example 7 | $LiNi_{0.8}Co_{0.1}Mn_{0.1}O_2$ | 16.1 | Zinc oxide | 3.64 | 190 | 24.539 | 28.18 |
| Example 8 | $LiNi_{0.8}Co_{0.1}Mn_{0.1}O_2$ | 18 | Alumina | 41.70 | 311 | 2936.6 | 4.42 |
| Example 9 | $LiNi_{0.8}Co_{0.1}Mn_{0.1}O_2$ | 19.5 | Alumina | 49.68 | 325 | 3211.5 | 5.03 |
| Example 10 | $LiNi_{0.8}Co_{0.1}Mn_{0.1}O_2$ | 21 | Alumina | 459.52 | 345 | 1201 | 131.98 |
| Example 11 | $LiNi_{0.8}Co_{0.1}Mn_{0.1}O_2$ | 18 | Alumina | 55.11 | 356 | 3201.4 | 6.13 |
| Example 12 | $LiNi_{0.8}Co_{0.1}Mn_{0.1}O_2$ | 17.2 | Alumina | 43.83 | 315 | 3875 | 3.56 |
| Comparative Example 1 | $LiNi_{0.8}Co_{0.1}Mn_{0.1}O_2$ | 8.7 | Alumina | 202.75 | 352 | 112191 | 0.64 |
| Comparative Example 2 | $LiNi_{0.8}Co_{0.1}Mn_{0.1}O_2$ | 15.0 | Alumina | 1.36 | 216 | 342 | 0.86 |
| Comparative Example 3 | $LiNi_{0.8}Co_{0.1}Mn_{0.1}O_2$ | 9.3 | Alumina | 8.02 | 206 | 1765.25 | 0.936 |
| Comparative Example 4 | $LiNi_{0.8}Co_{0.1}Mn_{0.1}O_2$ | 9.3 | Alumina | 10.82 | 224 | 2479.2 | 0.978 |

(continued)

| No. | Active material matrix | Active material matrix, $D_{50}$/μm | Type of coating agent | $\overline{D}/10^{-3}$ | Uncycled $\overline{E}$/GPa | $S_N^2$ | Coating effectiveness factor/$10^{-3}$ |
|---|---|---|---|---|---|---|---|
| Comparative Example 5 | $LiNi_{0.8}Co_{0.1}Mn_{0.1}O_2$ | 9.3 | Alumina | 9.68 | 236 | 2815.4 | 0.811 |
| Comparative Example 6 | $LiNi_{0.8}Co_{0.1}Mn_{0.1}O_2$ | 9.3 | Alumina | 9.22 | 234 | 2354.56 | 0.916 |

Table 3

| No. | Discharge capacity at 1 C (mAh/g) | Capacity retention ratio at 1 C after 100 cycles (%) | Surface residual alkali/ppm (LiOH + $Li_2CO_3$) | Young's modulus at 1 C after 100 cycles, E/GPa |
|---|---|---|---|---|
| Example 1 | 206.52 | 99.2 | 1860 | 232 |
| Example 2 | 189.45 | 98.6 | 2230 | 144 |
| Example 3 | 187.56 | 97.8 | 2180 | 177 |
| Example 4 | 186.56 | 98.5 | 2310 | 183 |
| Example 5 | 184.46 | 98.4 | 1840 | 290 |
| Example 6 | 204.42 | 98.9 | 1930 | 210 |
| Example 7 | 182.72 | 98.8 | 2040 | 161 |
| Example 8 | 178.86 | 97.6 | 1850 | 255 |
| Example 9 | 180.78 | 96.8 | 1900 | 263 |
| Example 10 | 177.56 | 95.23 | 1965 | 262 |
| Example 11 | 176.61 | 96.34 | 1972 | 269 |
| Example 12 | 180.2 | 93.56 | 2552 | 242 |
| Comparative Example 1 | 176.42 | 92.6 | 1870 | 310 |
| Comparative Example 2 | 180.25 | 89.3 | 3523 | 175 |
| Comparative Example 3 | 181.42 | 84.56 | 3250 | 171 |
| Comparative Example 4 | 200.04 | 95.24 | 2985 | 181 |
| Comparative Example 5 | 195.42 | 94.25 | 3984 | 190 |
| Comparative Example 6 | 194.02 | 93.86 | 4210 | 187 |

As can be seen from the data in Tables 2 and 3, cathode materials with identical chemical composition but different $\overline{D}$, $E$, and $S_N^2$ have different values of coating effectiveness factor, which affects physical and chemical performances of the cathode materials. Specifically, within a specified parameter range, the larger the value of the coating effectiveness factor, the better the electrochemical performance and/or the cycling performance of the cathode material are, and/or the lower the residual alkali content on the surface of the cathode material is. The underlying reason lies in that the coating layer not only can efficiently isolate the cathode material from corrosion by water and carbon dioxide in the air and the electrolyte solution during storage, but also can resist the formation of cracks in the cathode material during the charge-discharge process. However, excessively large layer thickness not only reduces the proportion of the active material, but also increases the path length for deintercalation/intercalation of lithium ions. Similarly, excessively low or nonuniform layer thickness cannot provide adequate isolation effect or effectively resist mechanical stress.

As can be seen from Comparative Example 1 and Example 1, for identical active materials or those with similar particle diameters, varying the amount of coating agent leads to significantly different coating effectiveness factors, which in turn leads to substantial differences in the electrochemical performance of the resulting battery materials. As can be seen from Examples 1-7, with different $\overline{D}$, different Young's modulus, and different $S_N^2$, the final coating effectiveness factors shows a significant difference, and the electrochemical performance also exhibits a significant difference.

Comparison between Examples 10-12 and Example 1 shows that, although the coating effectiveness factor is within the range of 0.001 GPa/nm²-0.2 GPa/nm², if any one of $D$, $\overline{E}$, and $S_N{}^2$ exceeds the preferred range, for example, $\overline{D}$ exceeds the range of 0.001-0.1, $\overline{E}$ exceeds the range of 160 GPa-350 GPa, or $S_N{}^2$ exceeds the range of 10 nm²-3,500 nm², the electrochemical performance of the battery will be reduced. As can be seen from comparison between Comparative Example 2 and Example 1, $\overline{D}$ is within the range of 0.001-0.1, $\overline{E}$ is within the range of 160 GPa-350 GPa, and $S_N{}^2$ is within the range of 10 nm²-3,500 nm², but when the coating effectiveness factor exceeds the preferred range, the physical and chemical performances of the corresponding cathode materials are obviously reduced. Therefore, by controlling the ratio $\overline{D}$ of the thickness of the coating layer to the diameter of the active material matrix, the stress resistance $\overline{E}$, and the coating uniformity $S_N{}^2$ to maintain the coating effectiveness factor within the range of 0.001 GPa/nm²-0.2 GPa/nm², the resulting cathode material exhibits excellent physical and electrochemical performances.

During the preparation, water washing was performed after the primary coating. As shown in Comparative Example 3, the capacity retention ratio is significantly reduced. The reason lies in that the material is not fully and uniformly coated by the primary coating, leaving exposed active material sites. The active material is highly sensitive to water, and is susceptible to chemical delithiation in water, which deteriorates the structure and electrochemical performance of the material, reducing the capacity retention ratio of the material and the $E$ of the material before and after cycling.

During the preparation, the secondary coating agent was not mixed with the surfactant. As shown in Comparative Example 4, the $E$ before and after cycling is significantly reduced, compared to Example 1. The reason lies in that when the secondary coating agent is not mixed with the surfactant, the coating layer on the material surface will have poor uniformity, leading to a decrease in the $E$ of the material. Consequently, the material in Comparative Example 4 has a lower capacity retention ratio than that in Example 1.

The coating layer obtained by dry coating exhibits poor uniformity. As shown in FIGs. 1 and 2, the inferior coating uniformity in Comparative Example 5 as compared with Example 1 leads to a decrease in the E of the material. This causes the active material to react with water and carbon dioxide in the air during storage, and the exposed active material also reacts with the electrolyte solution during the cycling process, resulting in damage to the cathode material. Consequently, the accumulation of stress damage caused by contraction/expansion during the electrochemical cycling process significantly reduces the $E$ after cycling.

However, if only wet coating is used during the preparation, it will also lead to agglomeration of the coating agent nanoparticles, thus forming large coating particles. Therefore, employing only dry coating or wet coating will reduce the coating uniformity. Both the capacity retention ratio of the material and the $E$ of the material before and after cycling in Comparative Examples 5 and 6 are lower than those in Example 1.

The above description merely provides the preferred embodiments of the present disclosure, and is not intended to limit the present disclosure. For those skilled in the art, the present disclosure may have various modifications and alterations. Any modification, equivalent replacement, improvement, and the like made within the spirit and principle of the present disclosure should be encompassed within the scope of protection of the present disclosure.

## Industrial Applicability

The coating effectiveness factor $A$ of the ternary cathode material in the present disclosure is 0.001 GPa/nm²-0.2 GPa/nm². Within this range, the coating layer and the active material matrix of the ternary cathode material demonstrate a coordinated relationship among $S_N{}^2$, $\overline{D}$, and $\overline{E}$, and the ternary cathode material features high structural stability, high cycling performance, low capacity decay rate, and low residual alkali content.

## Claims

1. A ternary cathode material, wherein particles of the ternary cathode material comprise an active material matrix and a coating layer coated on the active material matrix; a coating effectiveness factor $A$ of the ternary cathode material is 0.001 GPa/nm²-0.2 GPa/nm², wherein $A = \dfrac{\overline{D} \times \overline{E}}{S_N{}^2}$, $\overline{D}$ is an average value of a ratio of a thickness of the coating layer of the ternary cathode material particles to a diameter of the active material matrix, and is unitless; $\overline{E}$ is an average Young's modulus of the ternary cathode material particles, and is in a unit of GPa; $S_N{}^2$ is a variance of the thickness of the coating layer of the ternary cathode material particles, and is in a unit of nm².

2. The ternary cathode material according to claim 1, wherein $\overline{D}$ is 0.001-0.1, $\overline{D} = \dfrac{\sum_{i=1}^{N} D_i}{N}$, and $D = \dfrac{d_{iLT}}{d_{iID}}$, where $d_{iLT}$ is the thickness of coating layer of the ternary cathode material particles, and is in a unit of nm; $d_{iID}$ is a diameter of the active material matrix in the ternary cathode material particles, and is in a unit of nm; and $N$ is a sample size of the ternary cathode material particles; and/or,

$\bar{E}$ is 160 GPa-350 GPa, and $\bar{E} = \frac{\sum_{i=1}^{N} E_i}{N}$, where $N$ is the sample size of the ternary cathode material particles, and $E_i$ is a Young's modulus of the ternary cathode material particles measured by nanoindentation, and is in a unit of GPa; and/or,

$S_N^2$ is 10 nm$^2$-3,500 nm$^2$, wherein $S_N^2 = \frac{\sum_{i=1}^{N} (d_{iLT} - \overline{d_{LT}})^2}{N}$, $\overline{d_{LT}}$ is an average thickness of the coating layer of the ternary cathode material particles, and is in a unit of nm; and $N$ is the sample size of the ternary cathode material particles.

3. The ternary cathode material according to claim 2, wherein $d_{iLT}$ is 10 nm-1,000 nm, and $d_{iLT}$ is an average value of a sum of the thicknesses of the coating layer on a longest Feret diameter and a sum of the thicknesses of the coating layer on a shortest Feret diameter of the ternary cathode material particles; and/or,
   $d_{iID}$ is 1 $\mu$m-20 $\mu$m, and $d_{iID}$ is an average value of a length of an active material matrix on the longest Feret diameter and a length of an active material matrix on the shortest Feret diameter of the ternary cathode material particles.

4. The ternary cathode material according to any one of claims 2 to 3, wherein the sample size $N$ of the ternary cathode material particles is $\geq$10.

5. The ternary cathode material according to any one of claims 1 to 4, wherein the active material matrix has a general formula of $Li_xNi_aCo_bM_cM'_{1-a-b-c}A_yO_{2-y}$, wherein M is at least one selected from the group consisting of Al and Mn; M' is at least one selected from the group consisting of Zr, Sr, Mo, Ba, W, B, Ti, Mg, Li, C, Si, Ca, Cu, La, Ce, Bi, In, Nb, and Y; A is at least one selected from the group consisting of P and F; wherein $0.95 \leq x < 1.1$, a>0, b>0, c>0, $0.95 \leq (a+b+c) \leq 1$, $0 \leq y \leq 0.01$; and/or,
   the coating layer is at least one selected from the group consisting of $V_2O_5$, $Al_2O_3$, $ZrO_2$, $TiO_2$, $SnO_2$, $ZnO$, $MgO$, $RuO_2$, $La_2O_3$, $CeO_2$, $Co_3O_4$, $SiO_2$, $FePO_4$, $Li_3PO_4$, $Li_2MnO_3$, $LiAlO_2$, $Li_2TiO_3$, $Li_2ZrO_3$, $Li_3VO_4$, $Li_2SiO_3$, $AlF_3$, $LaF_3$, and $MgF_2$.

6. A method for preparing the ternary cathode material according to any one of claims 1 to 5, comprising:

   pre-coating: dry coating the active material matrix with a first coating agent and performing a first calcination, to obtain a pre-coated ternary cathode material; and
   coating: wet coating the pre-coated ternary cathode material with a mixed coating agent and performing a second calcination, to obtain the ternary cathode material.

7. The method for preparing the ternary cathode material according to claim 6, wherein the method satisfies at least one of features A-F below:

   A. the first coating layer is at least one selected from the group consisting of $V_2O_5$, $Al_2O_3$, $ZrO_2$, $TiO_2$, $SnO_2$, $ZnO$, $MgO$, $RuO_2$, $La_2O_3$, $CeO_2$, $Co_3O_4$, $SiO_2$, $FePO_4$, $Li_3PO_4$, $Li_2MnO_3$, $LiAlO_2$, $Li_2TiO_3$, $Li_2ZrO_3$, $Li_3VO_4$, $Li_2SiO_3$, $AlF_3$, $LaF_3$, and $MgF_2$;
   B. a mass ratio of the first coating agent to the active material matrix is 0.05%-2%;
   C. the first calcination is performed at a temperature of 400 °C-700 °C under an oxygen atmosphere for 3 h-10 h;
   D. a preparation method of the active material matrix comprises: calcining a mixture comprising a precursor of the ternary cathode material, a dopant, and a lithium source or a mixture comprising the precursor of the ternary cathode material and the lithium source, to obtain the active material matrix;
   E. the coating comprises: drying and granulating a slurry comprising the pre-coated ternary cathode material, the mixed coating agent, and a solvent to obtain a powder; and performing water washing, drying, the second calcination, and crushing on the powder successively, to obtain the ternary cathode material; and
   F. the second calcination is performed at a temperature of 400 °C-700 °C under an oxygen atmosphere for 3 h-10 h.

8. The method for preparing the ternary cathode material according to claim 7, wherein the coating satisfies at least one of features a-h below:

   a. a mass ratio of the mixed coating agent to the pre-coated ternary cathode material in the slurry is 5%-25%;

b. the mixed coating agent comprises a second coating agent and a surfactant, a mass ratio of the surfactant to the second coating agent in the mixed coating agent is 15-25:1;

c. the mixed coating agent comprises the second coating agent and the surfactant, the surfactant is at least one selected from the group consisting of sodium dodecylbenzenesulfonate, Tween-80, polymethacrylic acid, polyethylene glycol, and ammonium polymethacrylate;

d. the mixed coating agent comprises the second coating agent and the surfactant, the second coating agent is at least one selected from the group consisting of $V_2O_5$, $Al_2O_3$, $ZrO_2$, $TiO_2$, $SnO_2$, ZnO, MgO, $RuO_2$, $La_2O_3$, $Mn_3(PO_4)_2$, $AlPO_4$, $CeO_2$, $Co_3O_4$, $SiO_2$, $FePO_4$, $Li_3PO_4$, $Li_2MnO_3$, $LiAlO_2$, $Li_2TiO_3$, $Li_2ZrO_3$, $Li_3VO_4$, $Li_2SiO_3$, $AlF_3$, $LaF_3$, and $MgF_2$;

e. a solid content of the slurry is 100 g/L-200 g/L;

f. the solvent is at least one selected from the group consisting of methanol, ethanol, isopropanol, and butanol;

g. the drying is performed at a temperature of 60 °C-200 °C for 10 h-25 h; and

h. the mixed coating agent is airflow crushed for preparing the slurry, the airflow crushing is performed at an airflow crushing pressure of 5 MPa-12 MPa for 2.5 h-8 h.

9. A method for screening the ternary cathode material according to claim 1, wherein the ternary cathode material satisfies conditions of:

① the ternary cathode material comprises the active material matrix and the coating layer coated on the active material matrix; and

② the ternary cathode material has a coating effectiveness factor $A$ of 0.001 GPa/nm$^2$-0.2 GPa/nm$^2$, wherein

$$A = \frac{\bar{D} \times \bar{E}}{S_N^2}$$, $\bar{D}$ is an average value of a ratio of a thickness of the coating layer of the ternary cathode material particles to a diameter of the active material matrix, and is unitless; $\bar{E}$ is an average Young's modulus of the ternary cathode material particles, and is in a unit of GPa; $S_N^2$ is a variance of the thickness of the coating layer of the ternary cathode material particles, and is in a unit of nm$^2$.

10. A secondary battery, comprising the ternary cathode material according to any one of claims 1 to 5 or the ternary cathode material prepared by the method according to any one of claims 6 to 8.

FIG. 1

FIG. 2

**TRANSLATION**

## INTERNATIONAL SEARCH REPORT

International application No.

**PCT/CN2025/107570**

| A. | CLASSIFICATION OF SUBJECT MATTER |
| --- | --- |

H01M4/36(2006.01)i; H01M4/62(2006.01)i; H01M4/505(2010.01)i; H01M4/525(2010.01)i; H01M10/0525(2010.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

DWPI, CNABS, CNTXT, ENTXTC, ENTXT, 中国期刊网全文数据库, CJFD: Web of Science: 广东邦普循环科技有限公司, 陈方圆, 黄炜妍, 王涛, 余海军, 李长东, 正极, 阴极, 包覆, 厚度, 直径, 粒径, 平均值, 杨氏模量, 方差, 标准差, 平均差, 协方差, 锂, 钠, 钴, positive, anode, cathode, coat+, ternary, lithium-sodium-cobalt, coating thickness, diameter, Young's modulus

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 119208579 A (GUANGDONG BRUNP RECYCLING TECHNOLOGY CO., LTD.) 27 December 2024 (2024-12-27)<br>claims 1-10 | 1-10 |
| A | CN 112447951 A (CONTEMPORARY AMPEREX TECHNOLOGY CO., LTD.) 05 March 2021 (2021-03-05)<br>description, paragraphs 25, 55-56, 59, 68-70, 74-75, 88, 99, and 102 | 1-10 |
| A | CN 110931797 A (NINGBO RONBAY NEW ENERGY TECHNOLOGY CO., LTD.) 27 March 2020 (2020-03-27)<br>entire description | 1-10 |
| A | CN 114864940 A (QINGDAO INSTITUTE OF BIOENERGY AND BIOPROCESS TECHNOLOGY, CHINESE ACADEMY OF SCIENCES) 05 August 2022 (2022-08-05)<br>entire description | 1-10 |
| A | US 2022185697 A1 (CONTEMPORARY AMPEREX TECHNOLOGY CO., LTD.) 16 June 2022 (2022-06-16)<br>entire description | 1-10 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 July 2025** | **04 August 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2025/107570**

**C.    DOCUMENTS CONSIDERED TO BE RELEVANT**

| Category* | Citation of document, with indication, where appropriate, of the relevant passages | Relevant to claim No. |
|---|---|---|
| A | JP 2017107827 A (SUMITOMO METAL MINING K.K.) 15 June 2017 (2017-06-15)<br>entire description | 1-10 |
| A | NISAR, Umair et al. "Valuation of Surface Coatings in High-Energy Density Lithium-ion Battery Cathode Materials"<br>*Energy Storage Materials*, Vol. 38, 19 March 2021 (2021-03-19),<br>ISSN: 2405-8297,<br>pages 309-328 | 1-10 |

**INTERNATIONAL SEARCH REPORT**
**Information on patent family members**

International application No.

**PCT/CN2025/107570**

| Patent document cited in search report | | | Publication date (day/month/year) | Patent family member(s) | | | Publication date (day/month/year) |
|---|---|---|---|---|---|---|---|
| CN | 119208579 | A | 27 December 2024 | CN | 119208579 | B | 25 March 2025 |
| CN | 112447951 | A | 05 March 2021 | CN | 112447951 | B | 08 November 2022 |
| CN | 110931797 | A | 27 March 2020 | | None | | |
| CN | 114864940 | A | 05 August 2022 | | None | | |
| US | 2022185697 | A1 | 16 June 2022 | EP | 3993095 | A1 | 04 May 2022 |
| | | | | WO | 2021042989 | A1 | 11 March 2021 |
| | | | | CN | 112447939 | B | 15 March 2022 |
| | | | | CN | 112447939 | A | 05 March 2021 |
| JP | 2017107827 | A | 15 June 2017 | JP | 6848181 | B2 | 24 March 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2024117196893